Europäisches Patentamt

European Patent Office

Office européen des brevets

(19)

(11) Veröffentlichungsnummer: **0 014 474**
**B1**

(12) **EUROPÄISCHE PATENTSCHRIFT**

(45) Veröffentlichungstag der Patentschrift: **01.06.83**

(51) Int. Cl.³: **B 21 C 37/16, B 21 K 21/16**

(21) Anmeldenummer: **80100659.4**

(22) Anmeldetag: **08.02.80**

(54) Verfahren zur Herstellung eines Rohres.

(30) Priorität: **09.02.79 AT 977/79**

(43) Veröffentlichungstag der Anmeldung:
**20.08.80 Patentblatt 80/17**

(45) Bekanntmachung des Hinweises auf die Patenterteilung:
**01.06.83 Patentblatt 83/22**

(84) Benannte Vertragsstaaten:
**BE CH DE FR IT NL**

(56) Entgegenhaltungen:
DE - A - 1 527 819
DE - C - 114 783
DE - C - 129 875
DE - C - 392 192
DE - C - 653 067
DE - C - 957 749
US - A - 2 228 301
US - A - 2 240 456
US - A - 3 517 536

(73) Patentinhaber: **Vereinigte Metallwerke Ranshofen-Berndorf AG**
**Wohllebengasse 9**
**A-1041 Wien IV (AT)**

(72) Erfinder: **Lainighofer, Johann**
**Sparkassenstrasse 15**
**A-5280 Braunau/Inn (AT)**
Erfinder: **Loidl, Alfred, Dipl.-Ing.**
**Klosterstrasse 19**
**A-5280 Braunau/Inn (AT)**
Erfinder: **Peter, Erwin**
**Mozartstrasse 58**
**A-5280 Braunau/Inn (AT)**

(74) Vertreter: **Hain, Leonhard, Dipl.-Ing.**
**Tal 18/IV**
**D-8000 München 2 (DE)**

Courier Press, Leamington Spa, England.

Verfahren zur Herstellung eines Rohres

Die Erfindung betrifft ein Verfahren zur Herstellung eines Rohres mit durchgehend gleichbleibendem Außendurchmesser und abschnittsweise unterschiedlichem Innendurchmesser zur Bildung von nach innen gerichteten Wandverdickungen gemäß dem Oberbegriff des Patentanspruches.

Verfahren zur Herstellung von Rohren mit Wandverdickungen dieser Art sind bekannt, wobei hierbei von einem Stand der Technik, wie er durch die DE—C—114 783 bekanntgeworden ist, ausgegangen wird. Diese Wandverdickungen werden dazu benötigt, an besonders beanspruchten Stellen die erforderliche Wandfestigkeit zu schaffen, wohingegen der übrige Teil des Rohres aus Gewichts- und Materialersparnis dünnwandig sein kann. Verdickte Stellen sind beispielsweise erforderlich für Schweißnähte, Gewinde oder sonstige höhere mechanische oder chemische Beanspruchung, wie etwa durch Einspannmomente oder Korrosionsangriff. Die Herstellung der bekannten Rohre ist jedoch kompliziert und aufwendig, da bei diesen Ziehverfahren zur Wandreduzierung ein Dorn zum Einsatz kommt, der abschnittsweise aus dem Ziehwerkzeug entfernt werden muß. Dies erfordert insbesondere für lange Rohrstücke eine große und teure Vorrichtung. Das Ziehverfahren mit Zieheisen und Dorn läßt auch keine größeren Durchmesserveränderungen und Unterschiede in dem Wanddicken zu. Da der Dorn zum Abschluß des Verformungsvorgangs an einem Ende des verformten Rohres herausgezogen werden muß, kann an diesem Ende keine Verdickung ausgebildet sein. Gerade dies erweist sich in vielen Fällen als nachteilig, weil die so hergestellten Rohre meist an beiden Enden zu verschweißen oder auf andere Weise mit angrenzenden Teilen zu verbinden sind.

Der Erfindung liegt daher die Aufgabe zugrunde, ein Verfahren zur Herstellung von Rohren mit durchgehend gleichbleibendem Außendurchmesser und abschnittsweise unterschiedlichem Innendurchmesser vorzuschlagen, das geeignet ist, durch einfache Bearbeitungsvorgänge an besonders dünnwandigen Rohren verhältnismäßig starke Wandverdickungen an beliebigen Rohrstellen, wie auch an den beiden Rohrenden auszubilden.

Diese Aufgabe wird gemäß der Erfindung durch ein Verfahren gelöst, das durch die Merkmale des Patentanspruches gekennzeichnet ist.

Mit diesem Verfahren lassen sich durch einfache Verformungsvorgänge Rohre herstellen, die sich durch verhältnismäßig dünne und stellenweise dicke Wände auszeichnen. Die Wandverdickungen können dabei an jeder beliebigen Stelle und auch an den beiden Rohrenden vorgesehen sein. Es ist auch möglich, diese Verdickungen stufenförmig oder auch sich konisch erweiternd auszubilden. Da das erfindungsgemäße Verfahren jeden Verformungsvorgang dornlos ausführt, können auf diese Weise auch besonders lange Rohre bearbeitet werden. Besonders eignet sich diese Verfahren zur Verformung von Leichtmetallen.

Die Erfindung ist in der Zeichnung beispielsweise veranschaulicht. Dabei zeigen:

Fig. 1 und 2 ein Zwischenprodukt nach dem ersten Arbeitsgang,

Fig. 3 ein Fertigprodukt nach dem zweiten Arbeitsgang zu Fig. 2 und

Fig. 4 bis 7 Schnitte durch Anwendungsbeispiele für derartige Rohre.

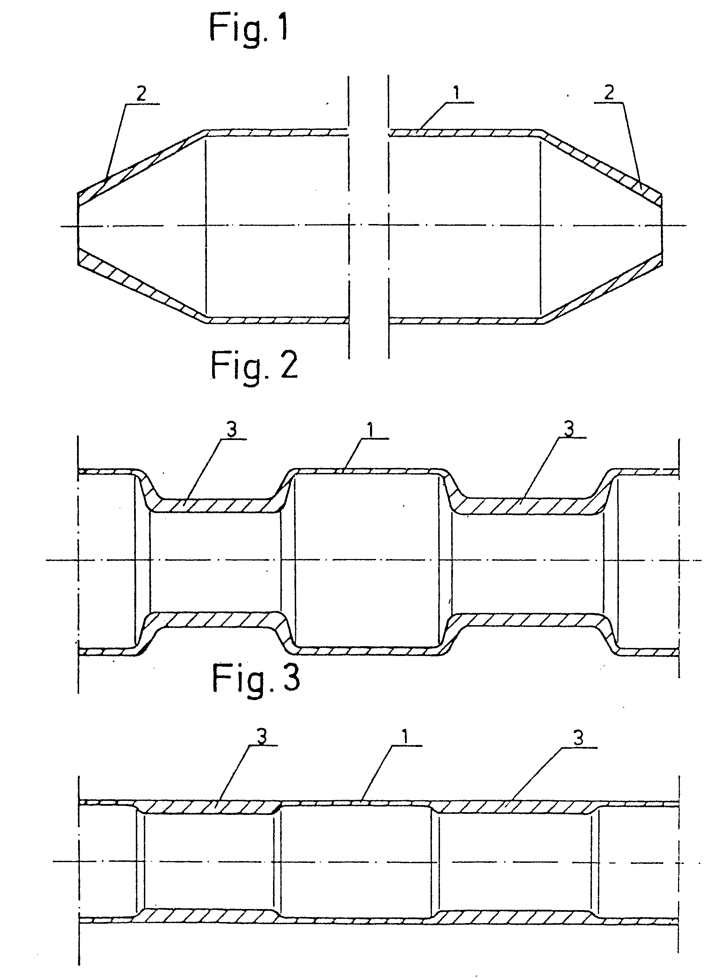

Wie man aus der Zeichnung erkennen kann, wird ein dünnwandiges Rohr 1 größeren Durchmessers an den Enden durch spanlose Verdichtung konifiziert, so daß sich dort kleinere Durchmesser, aber größere Wanddicken 2 bilden. Der Übergang ist dabei kontinuierlich. In Fig. 2 ist das Rohr 1 mit stufenförmigen Verdickungen 3 dargestellt, die durch Einschnürungen erzielt werden, welche durch Drücken, Rollieren, Gesenkschmieden, Walzen, Pressen, Hämmern u.dgl. eine Reduzierung des Außendurchmessers und somit eine Erhöhung der Wanddicken bewirken. Die Einschnürungen 3 bzw. Konifizierungen 2 sind im Verhältnis der notwendigen Rohrdurchmesser und Wanddicken festzulegen. Die Wandstärkenverdickung kann durch Ändern der Einschnürlängen variiert werden. Es ist möglich, sowohl Einzelrohre, als auch Vielfachlängen zu fertigen, da die Verdickungen an jeder Stelle ausgeführt werden können. Im Anschluß daran wird durch Ziehvorgänge das konische oder stufenförmig eingeschnürte Rohr plangezogen, so daß es die endgültige in Fig. 3 dargestellte Form erreicht. Dadurch wird ein homogenes, an der Oberfläche glattes Rohr gleichen Außendurchmessers erreicht, das die entsprechenden notwendigen Materialanhäufungen nach innen und einen entsprechend geringeren Außendurchmesser als das ursprüngliche Rohr aufweist.

Die Erfindung ist für alle Werkstoffe, bei denen gezogene oder gepreßte Rohre möglich sind, anwendbar. Da die verdickten Bereiche im Verhältnis zur Gesamtlänge meist gering sind, ergibt sind dadurch eine beachtliche Material- und Gewichtseinsparung, ohne die Festigkeit wesentlich zu beeinflussen.

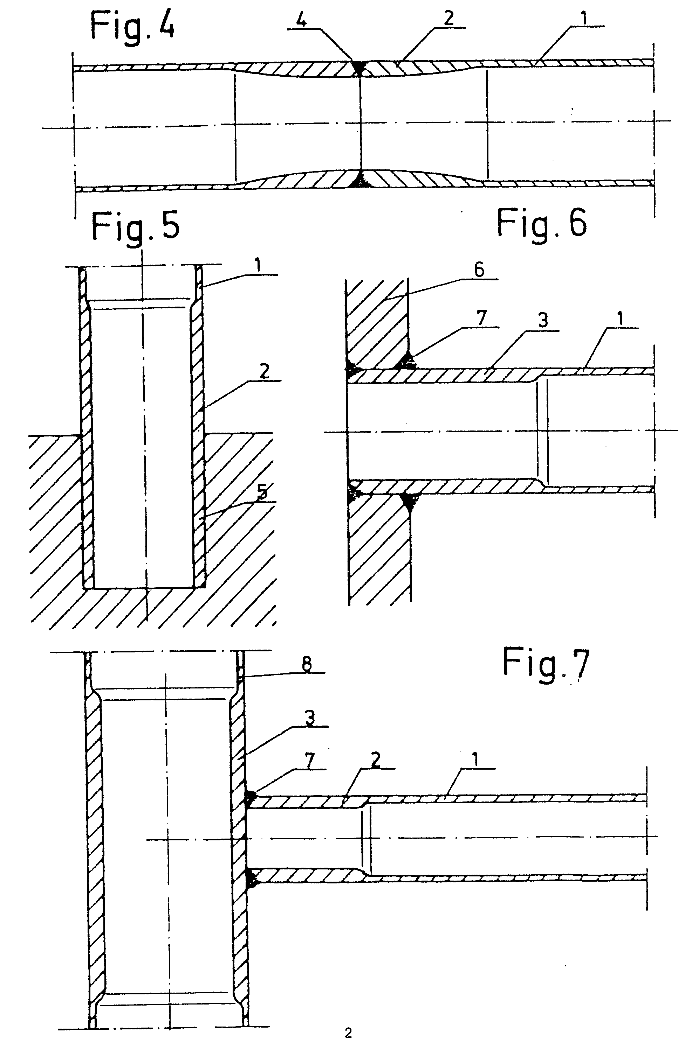

Einige Anwendungsbeispiele sind in den Fig. 4 bis 7 angeführt. Bekanntlich sollen die meisten Rohrrahmen, rohrförmige Stützen, manipulierbare Gestelle usw. möglichst leicht bei ausreichender Festigkeit sein. Die Rohre (Stäbe) müssen aus diesem Grunde mit den stärksten notwendigen Wanddicken aus Grund der größten Momente bzw. der notwendigen Anschlußquerschnitte ausgebildet werden. Insbesondere bei Schweißungen sind im Bereich der Erweichungszonen stärkere Wanddicken anzusetzen. Die Stumpfschweißverbindung eines dünnwandigen Rohres 1 zeigt Fig. 4, wo die durch die Schweißnaht 4 verbundenen Rohrenden 2 nach innen kontinuierlich verdickt ausgebildet sind. Dadurch wird nicht nur die erforderliche Festigkeit der Schweißnaht 4 erreicht, sondern unter Umständen ein Schweißen überhaupt erst ermöglicht, da andernfalls die zu dünne Wanddicke des Rohres unter dem Schweißbrenner wegfließen würde. Auch Einspannmomente erfordern größere Wanddicken, um ein Abknicken zu verhindern. Fig. 5 zeigt, wie ein dünnwandiges Rohr in ein Loch 5 mit verdickter Wandstärke 2 eingesetzt ist, was etwa bei einem einbetonierten Steher oder Mast der Fall sein kann. Die größere Wanddicke am Mastfuß bringt aber auch den Vorteil mit sich, daß dort infolge größerer Materialanhäufung ein Korrosionsangriff nicht so schnell zur völligen Zerstörung führt. Auch Mehrfachschweißverbindungen wie das Einschweißen eines Rohrendes 3 eines Rohres 1 in eine Behälterwand 6 durch Schweißnähte 7 kann durch die Verdickung leicht erfolgen, ohne die Festigkeit des Rohres an diesen Stellen übergebührlich herabzusetzen. Bei der Verbindung zweier Rohre bei Stabwerken gemäß Fig. 7 werden im Bereich der Schweißverbindung 7 beide Rohre 1 bzw. 8 mit verdickten Zonen 2 bzw. 3 ausgeführt, wodurch eine festigkeitsmäßig vollwirksame Verbindung entsteht une bei der Herstellung nicht die Gefahr des Loch-. brennens vorhanden ist.

Die Erfindung ist nicht auf die beschriebenen und dargestellten Ausführungsbeispiele beschränkt. Es können auch Rohre anderen Querschnitts, z.B. Vierkantrohre gefertigt werden und es können die verdickten Stellen, die von außen nicht sichtbar sind, durch Schnittmarken gekennzeichnet sein, insbesondere dann, wenn aus Rationalisierungsgründen Vielfachlängen hergestellt und nachher diese geteilt werden. Als Vormaterial können sowohl nahtlose gewalzte, gezogene oder gepreßte Rohre verwendet werden, als auch geschweißte, und die Anwendungsgebiete sind sehr umfangreich, da jeglicher Rohrrahmen, sowie Leitern, Fahrradrahmen hergestellt werden können, auch solche, bei denen die Dünnwandigkeit Probleme beim Nieten und Schrauben infolge hohen Lochleibuntsdruckes verursacht.

## Patentanspruch

Verfahren zur Herstellung eines Rohres (1) mit durchgehend gleichbleibendem Außendurchmesser und abschnittsweise unterschiedlichem Innendurchmesser zur Bildung von nach innen gerichteten Verdickungen (3), bei dem ein relativ dünnwandiges Rohr (1) größeren Durchmessers an jenen Stellen (2, 3), die eine größere Wanddicke erhalten sollen, im Außendurchmesser reduziert und durch Ziehen auf einen durchlaufend gleichmäßigen Außendurchmesser des Rohres (1) gebracht wird, dadurch gekennzeichnet, daß das Rohr (1) durch Drücken, Rollieren, Schmieden, Walzen, Hämmern oder Pressen dornlos im Außendurchmesser reduziert wird und daß daran sich ein oder mehrere dornlose Ziehvorgänge anschließen.

## Revendication

. Procédé pour fabriquer un tube (1) présentant un diamètre externe constant de manière ininterrompue et un diamètre interne variant par intervalles, en vue de former des épaississements (3) orientés vers l'intérieur, procédé dans lequel un tube (1) à paroi relativement mince et de grand diamètre est soumis à une réduction de diamètre externe dans les zonnes (2, 3) dont l'épaisseur de paroi est destinée à être augmentée, et dans lequel le diamètre externe dudit tube (1) est rendu uniforme de manière interrompue par étirage, procédé caractérisé par le fait que le diamètre externe du tube (1) est réduit par repoussage, par écrouissage au rouleau, par estampage, par laminage, par martelage ou par matriçage sans utiliser aucun mandrin; et par le fait qu'ont lieu ensuite un ou plusieurs processus d'étirage sans aucun mandrin.

## Claim

. Method for the production of a tube (1) with a constantly uniform outside diameter and an inside diameter varying in portions to form thickenings (3) directed to the inside, in which case a relatively thin-walled tube (1) of bigger diameter is reduced in the outside diameter at those portions (2, 3) which are to obtain a greater wall thickness and is brought to a constantly uniform outside diameter of the tube (1) by drawing, characterized in that the tube (1) is reduced in the outside diameter without the use of mandrels by spinning, spinning by roller tools, forging, rolling, hammering or pressing and that one or several drawing operations without mandrels follow thereupon.

Fig. 1

Fig. 2

Fig. 3

0014 474

Fig. 4

Fig. 5  Fig. 6

Fig. 7